# EUROPÄISCHE PATENTANMELDUNG

(11) **EP 2 929 962 A1**
(43) Veröffentlichungstag der Anmeldung: **14.10.2015**
(21) Anmeldenummer: 15162126.5
(22) Anmeldetag: 01.04.2015
(51) Int. Cl.: B22F 3/105, B29C 67/00

(54) **VERFAHREN UND VORRICHTUNG ZUR VERBESSERUNG DER WERKSTOFFQUALITÄT BEI GENERATVIEN HERSTELLVERFAHREN**

(30) Priorität: 11.04.2014 DE 102014207001
(71) Anmelder: MTU Aero Engines AG, 80995 München (DE)
(72) Erfinder: Bamberg, Joachim, 85221 Dachau (DE); Hessert, Roland, 82211 Herrsching (DE); Henkel, Benjamin, 80997 München (DE)

(57) **Zusammenfassung**

Die vorliegende Erfindung betrifft ein Verfahren und eine Vorrichtung zur Materialbearbeitung mit einem hochenergetischen Strahl (7), mit einer Strahlerzeugungseinrichtung (4) zur Erzeugung eines hochenergetischen Strahls und mit einer Bauteilaufnahme (2), in welcher das mit dem hochenergetischen Strahl zu bearbeitende Material angeordnet ist, wobei Strahlerzeugungseinrichtung und Bauteilaufnahme so zueinander angeordnet sind oder angeordnet werden können, dass der hochenergetische Strahl unter einem Winkel ungleich 0° oder 180° oder einem ganzzahligen Vielfachen davon auf die Materialoberfläche (12) des zu bearbeitenden Materials trifft, und wobei die Strahlerzeugungseinrichtung oder zumindest Teile davon und/oder eine weitere Strahlerzeugungseinrichtung so angeordnet werden können und/oder dass die Strahlerzeugungseinrichtung eine Umlenkeinrichtung (5,6) umfasst, dass ein hochenergetischer Strahl (7a) parallel und beabstandet zu der zu bearbeitenden Materialoberfläche (12) ausgerichtet werden kann.

## Beschreibung

### HINTERGUND DER ERFINDUNG

### GEBIET DER ERFINDUNG

Die vorliegende Erfindung betrifft ein Verfahren und eine Vorrichtung zur Materialbearbeitung bzw. schichtweisen Herstellung von Gegenständen, insbesondere ein Verfahren und eine Vorrichtung zum selektiven Laser - oder Elektronenstrahlschmelzen oder - sintern.

### STAND DER TECHNIK

Generative Herstellungsverfahren zur Herstellung eines Bauteils, wie beispielsweise selektives Laserschmelzen, selektives Lasersintern oder Laserauftragsschweißen, bei denen das Bauteil schichtweise unter Einsatz von Pulvermaterial aufgebaut wird, werden in der Industrie für das sogenannte rapid tooling, rapid prototyping oder auch für die Herstellung von Serienprodukten im Rahmen des rapid manufacturing eingesetzt. Insbesondere können derartige Verfahren auch zur Herstellung von Turbinenteilen, insbesondere von Teilen für Flugtriebwerke eingesetzt werden, bei denen beispielsweise aufgrund auf Grund des verwendeten Materials derartige generative Herstellungsverfahren vorteilhaft sind. Ein Beispiel hierfür findet sich in der DE 10 2010 050 531 A1.

Bei der generativen Herstellung mit einem schichtweisen Aufbringen von Material kann es jedoch zur Ausbildung von Materialerhebungen kommen, wie beispielsweise zur Bildung von Schweißkugeln, die von der aufgebrachten Schicht hervorstehen und die Dimensionen erreichen können, die beim nachfolgenden Erzeugen einer weiteren Schicht Probleme bereiten können. So kann einerseits das Aufbringen der nachfolgenden Pulverschicht gestört werden, und die aus dem vorangegangenen Prozess entstandenen Materialerhebungen können zudem beim Binden des Pulvers in der Schicht Bindungsfehler hervorrufen, so dass der Werkstoff des fertigen Bauteils Fehlstellen enthält. Dadurch kann es zum Ausfall und Versagen des Bauteils bei der späteren Anwendung kommen, was entsprechend vermieden werden muss.

### AUFGABE DER ERFINDUNG

Es ist deshalb Aufgabe der vorliegenden Erfindung, ein Verfahren und eine Vorrichtung zur generativen Herstellung von Bauteilen bzw. zur Materialbearbeitung mit hochenergetischen Strahlen bereitzustellen, bei denen das oben geschilderte Problem der Bindefehler vermieden bzw. zumindest verringert wird. Gleichwohl soll das Verfahren einfach durchführbar und die Vorrichtung einfach aufgebaut und bedienbar sein, um die entsprechende Materialbearbeitung in industriellen Prozessen einsetzen zu können.

### TECHNISCHE LÖSUNG

Diese Aufgabe wird gelöst durch eine Vorrichtung mit den Merkmalen des Anspruchs 1 sowie ein Verfahren mit den Merkmalen des Anspruchs 7. Vorteilhafte Ausgestaltungen sind Gegenstand der abhängigen Ansprüche.

Die Erfindung setzt zur Lösung des oben geschilderten Problems darauf, unerwünschte Materialerhebungen nach Ausbildung einer abgeschiedenen Materialschicht zu beseitigen oder zumindest auf eine unkritische Größe zu reduzieren, so dass die nachfolgenden Bearbeitungsprozesse zur Aufbringung von weiteren Schichten nicht nachteilig beeinflusst werden. Hierzu schlägt die Erfindung vor, einen hochenergetischen Strahl nach einem Bearbeitungsschritt, bei dem eine Schicht beispielsweise durch Aufschmelzen oder Sintern von Pulverpartikeln abgeschieden worden ist, parallel und beabstandet zur bearbeiteten Oberfläche über die bearbeitete Oberfläche zu führen, um eventuell vorhandene Materialerhebungen zu beseitigen bzw. einzuebnen. Entsprechend wird eine Vorrichtung vorgeschlagen, bei der die Strahlerzeugungseinrichtung und die Bauteilaufnahme so zueinander angeordnet werden können, dass nicht nur ein hochenergetischer Strahl zur Materialbearbeitung auf das zu bearbeitende Material auftreffen kann, sondern dass auch eine parallele Strahlführung parallel und beabstandet zur bearbeiteten bzw. in einem nachfolgen Schritt erneut zu bearbeitenden Materialoberfläche möglich ist. Entsprechend ist die Vorrichtung so hergerichtet, dass der hochenergetische Strahl nicht nur in einem Winkel ungleich 0° bzw. 180° oder einem ganzzahligen Vielfachen davon auf die Materialoberfläche des zu bearbeitenden Materials auftreffen kann, sondern die Vorrichtung ist so hergerichtet, dass ein hochenergetischer Strahl auch parallel zur zu bearbeitenden bzw. bearbeiteten Materialoberfläche, also in einem Winkel von 0° bzw. 180° zur Materialoberfläche geführt werden kann. Hierzu können entweder die Strahlerzeugungseinrichtung oder Teile davon so ausgebildet sein, dass sie entsprechend zur Bauteilaufnahme und somit zur zu bearbeitenden Materialoberfläche angeordnet werden können, oder es kann eine zusätzliche Strahlerzeugungseinrichtung vorgesehen werden, um einen weiteren separaten hochenergetischen Strahl zu erzeugen. Darüber hinaus ist es auch möglich, eine Umlenkeinrichtung vorzusehen, mit der der hochenergetische Strahl, mit dem die Materialbearbeitung durchgeführt wird, so umgelenkt werden kann, dass eine parallele Strahlführung zur bearbeiteten Materialoberfläche möglich ist.

Entsprechend kann in der Vorrichtung eine Bearbeitungsebene definiert sein, in der üblicherweise der hochenergetische Strahl zur Materialbearbeitung auf das zu bearbeitende Material trifft, um dieses aufzuschmelzen oder zu sintern, wobei bei der entsprechenden Erfindung die Bearbeitungsebene und/oder die Strahlerzeugungseinrichtung(en) so ausgebildet sind, dass auch ein hochenergetischer Strahl parallel und beabstandet zu der Bearbeitungsebene geführt werden kann. Unter Bearbeitungsebene ist somit die Materialoberfläche zu verstehen, die mit dem hochenergetischen Strahl zu bearbeiten ist oder von dem hochenergetischen Strahl bereits bearbeitet worden ist.

Bei der Bauteilaufnahme kann es sich um eine Pulverbettaufnahme handeln, in welcher Pulver aufgenommen werden kann, um beispielsweise selektives Laserschmelzen oder selektives Lasersintern durchzuführen. Entsprechend kann der hochenergetische Strahl ein Laserstrahl sein oder es kann sich um einen Elektronenstrahl oder einen anderen geeigneten Strahl handeln, mit dem Pulvermaterial aufgeschmolzen oder gesintert werden kann.

Wird zur Erzeugung eines parallel zur Materialoberfläche bzw. zur Bearbeitungsebene ausgerichteten Strahls eine Umlenkeinrichtung eingesetzt, um einen bereits für die Materialbearbeitung verwendeten hochenergetischen Strahl auch für die Einebnung oder Beseitigung von Materialerhebungen (Beam oder Laser Clearing) einzusetzen, kann die Umlenkeinrichtung mindestens einen Umlenkspiegel aufweisen, der verstellbar gelagert ist, um durch die Verstellmöglichkeiten ein Überstreichen des parallel geführten Strahls über die gesamte Materialoberfläche zu ermöglichen. Der Umlenkspiegel kann entsprechend verkippbar ausgebildet sein, um verschiedene Reflexionswinkel einstellen zu können, und/oder drehbar, um durch die Drehung des Spiegels ein Überstreichen der Materialoberfläche zu ermöglichen. Darüber hinaus kann der Spiegel auch translatorisch verstellbar gelagert sein, um durch die Verschiebung entlang einer oder mehrerer Achsen ebenfalls ein Überstreichen des parallel geführten Laserstrahls über die gesamte Materialoberfläche zu gewährleisten.

Damit der Laserstrahl, der parallel über die Materialoberfläche geführt wird, keine Beschädigungen an umliegenden Gegenständen oder eine Gefährdung von Personen verursachen kann, kann die Vorrichtung einen Strahlabsorber aufweisen, mit dem die Strahlung des hochenergetischen Strahls nach dem Überstreichen der Materialoberfläche absorbiert wird. Der Strahlabsorber kann insbesondere gegenüberliegend einer Umlenkeinrichtung und/oder zumindest teilweise um die Bauteilaufnahme herum vorgesehen sein.

Weiterhin kann die erfindungsgemäße Vorrichtung eine Einrichtung zur Charakterisierung der bearbeiteten und/oder zu bearbeitenden Oberfläche aufweisen, um feststellen zu können, ob unerwünschte Materialerhebungen vorhanden sind, und gegebenenfalls, in welcher Form, Größe, Anzahl, Verteilung usw. die Materialerhebungen vorliegen. Mit den Ergebnissen der Charakterisierung kann dann die parallele Strahlführung über die Materialoberfläche entsprechend gesteuert werden.

Die parallele Strahlführung des hochenergetischen Strahls über die Materialoberfläche kann in einem Abstand von weniger oder gleich 200 µm, insbesondere weniger oder gleich 150 µm, vorzugsweise weniger oder gleich 100 µm, erfolgen, um entsprechende Materialerhebungen, die größer sind als die genannten Dimensionen, beseitigen oder verkleinern zu können.

### KURZBESCHREIBUNG DER FIGUREN

Die beigefügten Zeichnungen zeigen in rein schematischer Weise in
- Fig.1: eine schematischen Darstellung einer Vorrichtung zum selektiven Laserschmelzen;
- Fig.2: eine um 90° gedrehte Darstellung der Vorrichtung aus Fig. 1;
- Fig. 3: ein Verfahrensablaufdiagramm; und in
- Fig. 4: ein weiteres Verfahrensablaufdiagramm.

### AUSFÜHRUNGSBEISPIELE

Weitere Vorteile, Kennzeichen und Merkmale der vorliegenden Erfindung werden bei der nachfolgenden detaillierten Beschreibung eines Ausführungsbeispiels deutlich, wobei die Erfindung nicht auf diese Ausführungsbeispiele beschränkt ist.

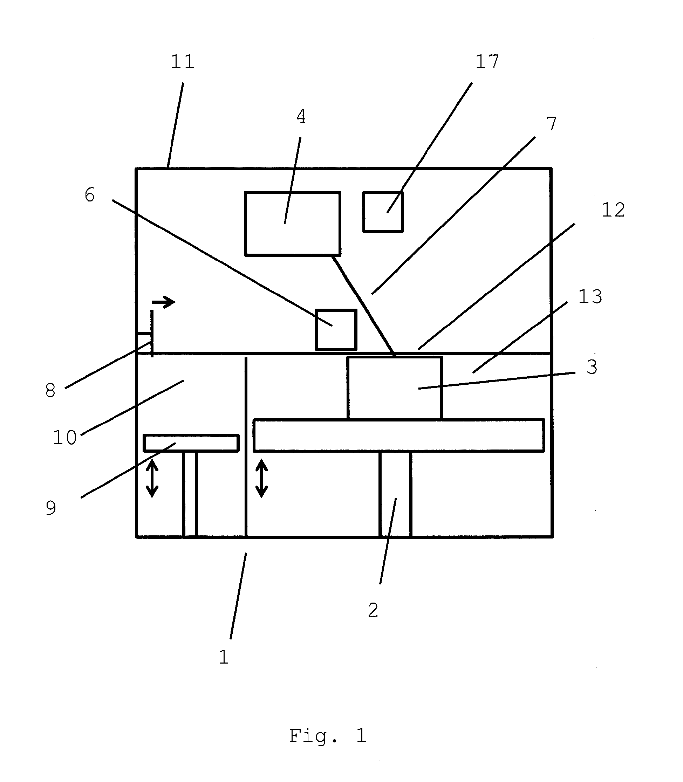

Die Figur 1 zeigt in einer rein schematischen Schnittdarstellung eine Vorrichtung 1, wie sie für das selektive Laserschmelzen zur generativen Herstellung eines Bauteils Verwendung finden kann. Die Vorrichtung 1 umfasst einen Hubtisch 2, auf dessen Plattform ein Halbzeug 3 angeordnet ist, auf dem schichtweise Material abgeschieden wird, um ein dreidimensionales Bauteil zu erzeugen. Hierzu wird mittels des Schiebers 8 Pulver, das sich oberhalb eines Hubtisches 9 in einem Pulvervorrat 10 befindet, schichtweise über das Halbzeug 3 geschoben und anschließend durch den Laserstrahl 7 eines Lasers 4 durch Aufschmelzen und anschließendes Wieder - Erstarren mit dem bereits vorhandenen Halbzeug 3 verbunden. Die Verbindung des Pulvermaterials in einer Schicht mit dem Halbzeug 3 erfolgt durch den Laserstrahl 7 abhängig von der gewünschten Kontur des zu fertigenden Bauteils, wobei der Laserstrahl in entsprechender Weise über die Pulverschicht bewegt wird, sodass beliebige, dreidimensionale Formen erzeugt werden können. Um unerwünschte Reaktionen mit der Umgebungsatmosphäre beim Aufschmelzen oder Sintern zu vermeiden, findet der Prozess in einem abgeschlossenen Raum, der durch ein Gehäuse 11 der Vorrichtung 1 bereit gestellt wird, statt und es wird zudem eine inerte Gasatmosphäre bereit gestellt, um beispielsweise Oxidation des Pulvermaterials beim Abscheiden und dergleichen zu vermeiden. Als inertes Gas kann beispielsweise Stickstoff verwendet werden, welches über eine Gasversorgung bereit gestellt wird.

Bevor mit dem Laserstrahl 7 das im Bereich des Halbzeugs 3 vorhandene Pulver aufgeschmolzen und beim Wieder-Erstarren mit dem Halbzeug 3 verbunden werden kann, erzeugt der Schieber 8 ein Pulverbett 13, welches eine ebene Materialoberfläche 12 aufweist, die das Halbzeug 3 überdeckt, so dass sich zwischen der Materialoberfläche 12 und dem Halbzeug 3 eine Schicht aus Pulvermaterial bildet, die mit dem Laserstrahl 7 aufgeschmolzen und mit dem Halbzeug 3 verbunden werden kann. Die Pulvermaterialoberfläche 12 definiert entsprechend eine Bearbeitungsebene, in welcher das zu bearbeitende Pulvermaterial aufgeschmolzen und beim WiederErstarren mit dem Halbzeug 3 verbunden wird. Nach der Materialbearbeitung, also dem Abscheiden der Schicht durch Aufschmelzen und Wieder-Erstarren, wird die (bearbeitete) Materialoberfläche durch die Oberfläche des nicht behandelten Pulvers des Pulverbetts 13 und die Oberfläche des Halbzeugs 3 gebildet.

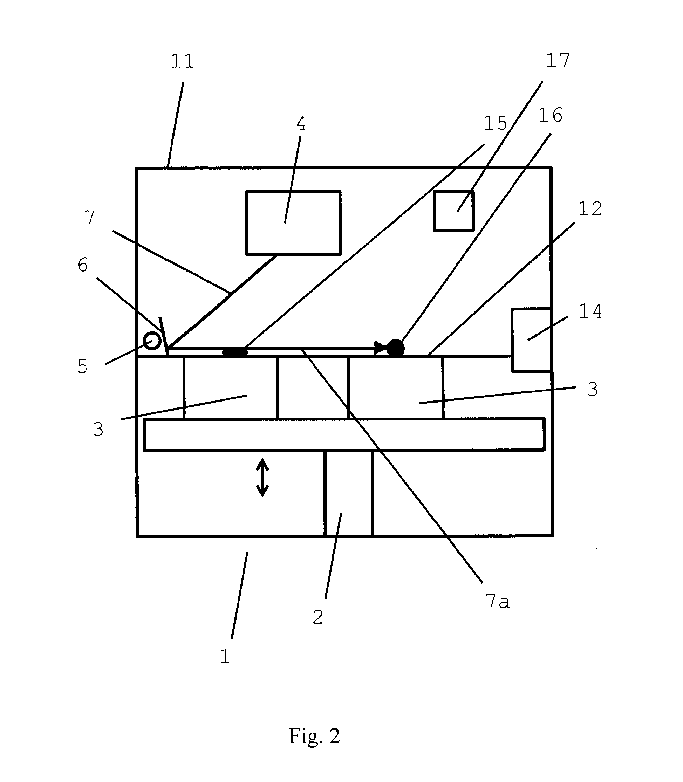

Die Fig. 2 zeigt in einer Schnittdarstellung, bei der die Schnittebene um 90° gegenüber derjenigen aus Fig. 1 gedreht worden ist, einen Bearbeitungszustand, nachdem das Aufschmelzen der Pulverschicht und Wieder-Erstarren des Materials zum Aufbau des Halbzeugs 3, also die Schichtabscheidung, stattgefunden hat. In Fig. 2 erkennt man auch, dass mehrere Halbzeuge 3 gleichzeitig gefertigt werden.

Bei der Ausbildung der Schicht kann es zur Ausbildung von Materialerhebungen 16 auf den Halbzeugen 3 kommen, wie überdimensional zur Verdeutlichung in Fig. 2 an einem Beispiel dargestellt. Derartige Materialerhebungen, die als Schweißkugeln entstehen können, stören den nachfolgenden Schichtaufbau, da es aufgrund der Größe der Materialanhäufung dazu kommen kann, dass die Pulverschicht nicht richtig aufgebracht werden kann und/oder dass die Materialanhäufungen nicht richtig aufgeschmolzen werden, so dass sich im Material des Halbzeugs 3 Fehlstellen in Form von Bindefehler des Materials ergeben können.

Gemäß der Erfindung wird dieses Problem dadurch beseitigt, dass ein Laserstrahl 7a parallel und beabstandet zur bearbeiteten Materialoberfläche 12 geführt wird, der die Materialerhebungen 16 erneut aufschmilzt und einebnet. Hierzu kann der Laserstrahl 7 des Lasers 4 verwendet werden, der im vorangegangenen Verfahrensschritt die Materialbearbeitung durch selektives, schichtweises Aufschmelzen des Pulvermaterials bewirkt hat. Hierzu weist die Vorrichtung 1 eine Umlenkeinrichtung mit einem Spiegel 6 auf, der in der Fig. 1 in Frontansicht und in der Fig. 2 in einer Seitenansicht dargestellt ist. Der Spiegel 6 ist über ein Gelenk 5 verschwenkbar gelagert, um abhängig von der Einstrahhichtung des Laserstrahls 7 den gewünschten Reflexionswinkel bereitzustellen, mit dem der reflektierte Laserstrahl 7a parallel und beabstandet zur Materialoberfläche 12 geführt werden kann.

Der Spiegel 6 ist weiterhin um eine Drehachse, die in der Bildebene ist, verdrehbar angeordnet, so dass der abgelenkte Laserstrahl 7a über die Materialoberfläche 12 der Bauteile 3 verschwenken kann. Dadurch können Materialerhebungen 16 in allen Bereichen der Materialoberfläche und insbesondere an verschiedenen Positionen im Bereich der Halbzeuge 3 bearbeitet werden. Zusätzlich kann der Spiegel 6 entlang einer Achse, die senkrecht zur Bildebene der Fig. 2 angeordnet ist oder in der Fig. 1 von links nach rechts verläuft, verschoben werden, um auch dadurch ein Überstreichen des abgelenkten Laserstrahls 7a über die gesamte Materialoberfläche 12 zu ermöglichen. Aufgrund der Strahlablenkungseinrichtungen des Lasers 4, welche ermöglichen, dass der Laser 7 zur Materialbearbeitung, d. h. zum schichtweisen Aufschmelzen des Pulvers über die Materialoberfläche 12 gerastet bzw. verfahren werden kann, kann auch der Spiegel 6 in seinen verschiedenen Positionen entsprechend mit dem Laserstrahl 7 bestrahlt werden.

Um den parallel zur Materialoberfläche 12 geführten Laserstrahl 7a nicht unbeabsichtigt auf beliebige benachbarte Gegenstände zu richten, weist die Vorrichtung 1 einen Laserstrahlabsorber 14 auf, der sich beispielsweise gegenüberliegend dem Spiegel 6 entlang einer Seite der Vorrichtung 1, also bei der Fig. 2 senkrecht zur Bildebene, erstrecken kann.

Wie in Fig. 2 gezeigt, trifft der parallel und beabstandet zur Materialoberfläche 12 geführte Laserstrahl 7a auf eine Materialerhebung 16, so dass diese durch Wechselwirkung mit dem Laserstrahl 7a aufgeschmolzen wird. Dadurch wird die Materialerhebung 16, z. B. in der Form einer Schweißkugel 16, eingeebnet, wie für die Schmelzlinse 15 gezeigt. In dieser eingeebneten Form stellt die Materialerhebung 16, nunmehr in Form einer Schmelzlinse 15, eine geringere Störung für das Aufbringen der Pulverschicht dar, und auch das Aufschmelzen innerhalb der Pulverschicht erfolgt leichter, so dass Bindefehler im Halbzeug 3 ausgeschlossen werden können. Hierzu kann der Abstand, in dem der Laserstrahl 7a parallel zur Materialoberfläche 12 geführt wird, beispielsweise in Abhängigkeit des verwendeten Materials, unterschiedlich eingestellt werden, um unterschiedlich große Materialerhebungen 16 zu beseitigen. So kann es beispielsweise für ein bestimmtes Material akzeptabel sein, wenn Materialerhebungen bis zu einer Größe von 200 µm über die bearbeitete Materialoberfläche 12 vorstehen, da im nachfolgenden Schichtabscheideschritt sichergestellt ist, dass derartige Materialerhebungen aufgeschmolzen werden und sich mit dem übrigen Material zuverlässig verbinden. Entsprechend kann der Abstand des parallelen Laserstrahls 7a auch auf 200 µm eingestellt werden, so dass nur Materialerhebungen mit einer größeren Dimension senkrecht zur Materialoberfläche von dem Laserstrahl 7a getroffen und aufgeschmolzen werden. Wird jedoch ein Material verwendet, welches bereits bei Materialerhebungen in Richtung senkrecht zur bearbeiteten Materialoberfläche in der Größenordnung von 100 µm zu Bindefehlern bei dem nachfolgenden Schichtabscheideprozess führt, so kann der Abstand des parallel zur Materialoberfläche 12 geführten Laserstrahls 7a auf einen Wert von 50 µm eingestellt werden.

Um die Prozessparameter für die parallele Strahlführung den tatsächlichen Gegebenheiten besser anpassen zu können, beispielsweise hinsichtlich Geschwindigkeit des Überstreichens des parallelen Laserstrahls über die Materialoberfläche 12, Leistung des Laserstrahls etc., ist eine Einrichtung 17 zur Charakterisierung der Materialoberfläche 12 vorgesehen, mit der entsprechende Materialerhebungen 16 detektiert werden können. Beispielsweise kann es sich um ein Interferometer handeln, mit dem die Größenordnung der Materialerhebungen in Richtung senkrecht zur Materialoberfläche 12 bestimmt werden kann. Sollte mit der Einrichtung 17 zur Charakterisierung der Materialoberfläche festgestellt werden, dass keine relevanten Materialerhebungen 16 vorliegen, kann auch auf den Prozessschritt der parallelen Strahlführung verzichtet werden.

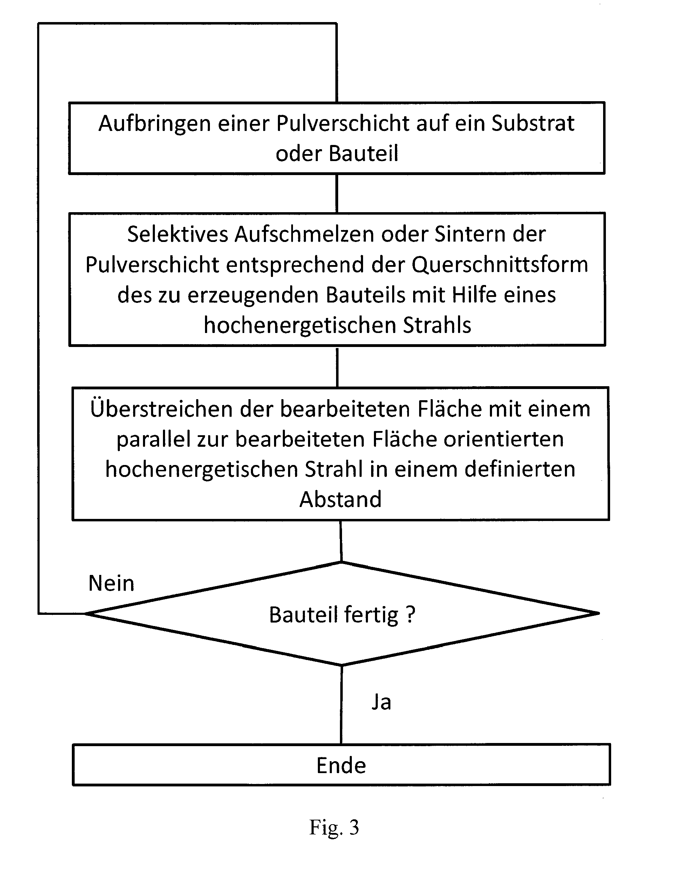

Ansonsten läuft das Verfahren zur Materialbearbeitung mit einem hochenergetischen Strahl bzw. zum selektiven Laserschmelzen mit der Vorrichtung gemäß dem Ausführungsbeispiel der Figuren 1 und 2 zumindest teilweise nach dem Ablaufdiagramm der Fig. 3 ab.

Zunächst wird eine Pulverschicht auf ein Substrat oder Bauteil, wie das Halbzeug 3, aufgebracht, beispielsweise durch Herstellung eines Pulverbetts mit einer ebenen Materialoberfläche 12, wie in den Figuren 1 und 2, in welchem das Substrat, Bauteil oder Halbzeug 3 eingebettet ist, so dass in dem Bereich, in dem das Halbzeug weiter aufgebaut werden soll, eine Pulverschicht ausgebildet ist.

Im nächsten Schritt wird durch selektives Aufschmelzen oder Sintern der Pulverschicht entsprechend der Querschnittsform, die das Bauteil bzw. Halbzeug in der gegebenen Schichtebene aufweist, die Möglichkeit zur Verbindung des Pulvermaterials mit dem Halbzeug 3 gegeben. Hierzu wird der hochenergetische Strahl, beispielsweise in Form des Laserstrahls der Vorrichtung 1 der Figuren 1 und 2, verwendet.

Nach der entsprechenden Materialbearbeitung wird die bearbeitete Materialoberfläche mit einem hochenergetischen Strahl parallel und beabstandet zur bearbeiteten Oberfläche überstrichen, um Materialerhebungen, die im vorangegangenen Bearbeitungsschritt entstanden sind, einzuebnen. War die aufgebrachte Schicht noch nicht die letzte Schicht, so wird der Vorgang wiederholt, während im anderen Fall die Bearbeitung zu Ende ist.

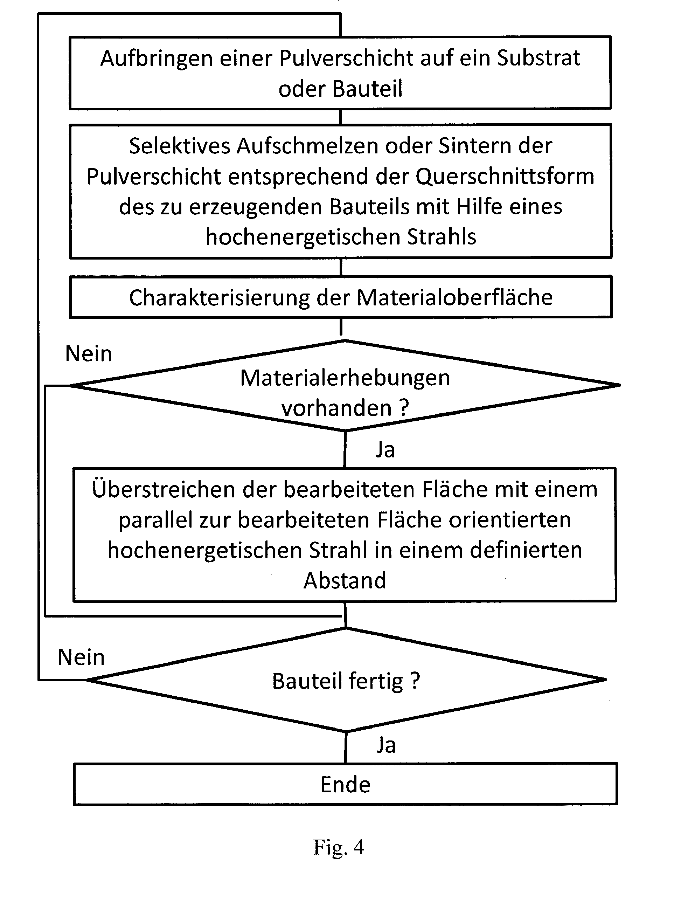

Gemäß der Variante, die im Ablaufdiagramm der Fig. 4 dargestellt ist, wird nach dem Schritt der Materialbearbeitung ein Charakterisierungsschritt durchgeführt, bei dem die Materialoberfläche daraufhin untersucht wird, ob und gegebenenfalls in welcher Form Materialerhebungen vorliegen.

Wird festgestellt, dass relevante Materialerhebungen vorliegen, wird wiederum ein parallel zur bearbeiteten Fläche ausgerichteter, hochenergetischer Strahl über die bearbeitete Oberfläche geführt, um Materialerhebungen einzuebnen. Werden keine relevanten Materialerhebungen im Charakterisierungsschritt festgestellt, wird der Bearbeitungsschritt des Überstreichens der bearbeiteten Fläche mit einem parallel ausgerichteten, hochenergetischen Strahl weggelassen.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Form möglich sind, dass einzelne Merkmale weggelassen oder andersartige Kombinationen von Merkmalen verwirklicht werden, sofern der Schutzbereich der beigefügten Ansprüche nicht verlassen wird. Die vorliegende Offenbarung schließt sämtliche Kombinationen aller vorgestellten Einzelmerkmale mit ein.

### BEZUGSZEICHENLISTE

- 1: Vorrichtung zum selektiven Laserschmelzen
- 2: Hubtisch
- 3: Halbzeug
- 4: Laser
- 5: Gelenk
- 6: Spiegel
- 7: Laserstrahl
- 8: Schieber
- 9: Hubtisch
- 10: Pulvervorrat
- 11: Gehäuse
- 12: Materialoberfläche
- 13: Pulverbett
- 14: Laserstrahlabsorber
- 15: Schmelzlinse
- 16: Materialerhebung
- 17: Vorrichtung zur Charakterisierung

## Patentansprüche

1. Vorrichtung zur Materialbearbeitung mit einem hochenergetischen Strahl (7), mit einer Strahlerzeugungseinrichtung (4) zur Erzeugung eines hochenergetischen Strahls und mit einer Bauteilaufnahme (2), in welcher das mit dem hochenergetischen Strahl zu bearbeitende Material angeordnet ist, wobei Strahlerzeugungseinrichtung und Bauteilaufnahme so zueinander angeordnet sind oder angeordnet werden können, dass der hochenergetische Strahl unter einem Winkel ungleich 0° oder 180° oder einem ganzzahligen Vielfachen davon auf die Materialoberfläche (12) des zu bearbeitenden Materials trifft,
**dadurch gekennzeichnet, dass**
die Strahlerzeugungseinrichtung oder zumindest Teile davon und/oder eine weitere Strahlerzeugungseinrichtung so angeordnet werden können und/oder dass die Strahlerzeugungseinrichtung eine Umlenkeinrichtung (5,6) umfasst, dass ein hochenergetischer Strahl (7a) parallel und beabstandet zu der zu bearbeitenden Materialoberfläche (12) ausgerichtet werden kann.

2. Vorrichtung nach Anspruch 1,
**dadurch gekennzeichnet, dass**
die Vorrichtung eine Bearbeitungsebene aufweist, in der der hochenergetische Strahl zur Materialbearbeitung auf das zu bearbeitende Material trifft, wobei die Bearbeitungsebene so ausgebildet ist, dass der hochenergetische Strahl parallel und beabstandet zu dieser geführt werden kann.

3. Vorrichtung nach Anspruch 1 oder 2,
**dadurch gekennzeichnet, dass**
die Bauteilaufnahme (2) eine Pulverbettaufnahme aufweist, in welchem Pulver aufgenommen werden kann, welches durch selektives Schmelzen mit Hilfe des hochenergetischen Strahls schichtweise zu mindestens einem Festkörper verbunden werden kann.

4. Vorrichtung nach einem der vorhergehenden Ansprüche,
**dadurch gekennzeichnet, dass**
die Umlenkeinrichtung mindestens einen Umlenkspiegel (6) aufweist, der verstellbar gelagert ist, insbesondere entlang einer oder mehrerer Achsen verschiebbar und/oder um ein oder mehrere Achsen verkippbar und/oder verdrehbar.

5. Vorrichtung nach einem der vorhergehenden Ansprüche,
**dadurch gekennzeichnet, dass**
die Vorrichtung zumindest teilweise um die Bauteilaufnahme herum, vorzugsweise gegenüberliegend einer Umlenkeinrichtung für den hochenergetischen Strahl einen Strahlabsorber (14) aufweist.

6. Vorrichtung nach einem der vorhergehenden Ansprüche,
**dadurch gekennzeichnet, dass**
die Vorrichtung weiterhin eine Einrichtung (17) zur Charakterisierung der bearbeiteten und/oder zu bearbeitenden Oberfläche aufweist.

7. Verfahren zur Materialbearbeitung mit einem hochenergetischen Strahl (7), insbesondere mit Hilfe einer Vorrichtung (1) nach einem der vorhergehenden Ansprüche, bei welchem das zu bearbeitende Material an einer zu bearbeitenden Materialoberfläche (12) mit dem hochenergetischen Strahl zumindest teilweise aufgeschmolzen oder gesintert wird,
**dadurch gekennzeichnet, dass**
nach dem Aufschmelzen des Materials derselbe oder ein anderer hochenergetischer Strahl (7a) parallel und beabstandet zu der bearbeiteten Materialoberfläche (12) geführt wird, um auf der Materialoberfläche (12) befindliche, unerwünschte Stoffansammlungen (16) zu beseitigen oder zu verringern.

8. Verfahren nach Anspruch 7,
**dadurch gekennzeichnet, dass**
der hochenergetische Strahl (7a) in einem Abstand von weniger oder gleich 200 µm, insbesondere weniger oder gleich 150 µm, vorzugsweise weniger oder gleich 100 µm über die bearbeitete Materialoberfläche geführt wird.

9. Verfahren nach einem der Ansprüche 7 oder 8,
**dadurch gekennzeichnet, dass**
der hochenergetische Strahl (7a) über die gesamte bearbeitete Oberfläche in parallel zur bearbeiteten Oberfläche ausgerichteter Strahlführung bewegt wird.

10. Verfahren nach einem der Ansprüche 7 bis 9,
**dadurch gekennzeichnet, dass**
es sich bei der Materialbearbeitung um eine schichtweise Herstellung eines Bauteils aus Pulver mitttels selektivem Laser - oder Elektronenstrahlschmelzen oder -sintern handelt.

11. Verfahren nach einem der Ansprüche 7 bis 10,
**dadurch gekennzeichnet, dass**
das mit zur bearbeiteten Materialoberfläche parallelen Strahlführung durchgeführte Überstreichen nach jedem schichtweisen, selektiven Aufschmelzen erfolgt.

12. Verfahren nach einem der Ansprüche 7 bis 11,
**dadurch gekennzeichnet, dass**
die bearbeitete Materialoberfläche vor und/oder nach und/oder während dem Überstreichen mit der parallelen Strahlführung charakterisiert wird, insbesondere mit Hilfe mikroskopischer oder interferometrischer Verfahren, insbesondere durch optische Kohärenztomographie.

13. Verfahren nach Anspruch 12,
**dadurch gekennzeichnet, dass**
das Überstreichen mit paralleler Strahlführung in Abhängigkeit von dem Charakterisierungsergebnis durchgeführt wird.
